**Europäisches Patentamt**

**European Patent Office**

**Office européen des brevets**

(11) Veröffentlichungsnummer : **0 455 102 B1**

(12) **EUROPÄISCHE PATENTSCHRIFT**

(45) Veröffentlichungstag der Patentschrift :
**21.06.95 Patentblatt 95/25**

(21) Anmeldenummer : **91106498.8**

(22) Anmeldetag : **23.04.91**

(51) Int. Cl.⁶ : $G01S\ 3/04$

(30) Priorität : **04.05.90 DE 4014407**

(43) Veröffentlichungstag der Anmeldung :
**06.11.91 Patentblatt 91/45**

(45) Bekanntmachung des Hinweises auf die
Patenterteilung :
**21.06.95 Patentblatt 95/25**

(84) Benannte Vertragsstaaten :
**DE FR GB IT**

(56) Entgegenhaltungen :
**DE-A- 2 721 632**
**DE-A- 3 419 341**
**DE-A- 3 432 145**
**GB-A- 2 061 051**
**GB-A- 2 072 986**

(54) Hochfrequenzpeiler.

(73) Patentinhaber : **Rohde & Schwarz GmbH & Co. KG**
**Mühldorfstrasse 15**
**D-81671 München (DE)**

(72) Erfinder : **Schmengler, Eckhard, Dr. Dipl.-Ing.**
**Clemens-Krauss-Strasse 22**
**W-8000 München 60 (DE)**

(74) Vertreter : **Graf, Walter, Dipl.-Ing.**
**Sckellstrasse 1**
**D-81667 München (DE)**

## Beschreibung

Die Erfindung betrifft einen Hochfrequenzpeiler laut Oberbegriff des Hauptanspruches.

Hochfrequenzpeiler dieser Art sind beispielsweise als sogenannte Interferometerpeiler aus der DE-A-3 419 341 bekannt. Sie besitzen gegenüber Peilern mit umlaufender AM- bzw. FM-Antennencharakteristik wie Dopplerpeiler den Vorteil, daß der Abstand zwischen zwei benachbarten Einzelantennen größer als $\lambda/2$ sein darf und daher der Aufwand für solche Peiler, bei denen die einzelnen Empfangsantennen diskret abgetastet werden, wesentlich geringer ist. Eine solche diskrete Antennenabtastung führt jedoch zu einem breiten Abtastspektrum und damit in herkömmlichen Empfangskanälen mit analogen Filtern in der ZF-Lage zu Selektions- und Einschwingproblemen, die nur dadurch in Grenzen gehalten werden können, daß relativ lange Anschaltzeiten für die Antennenabtastung in Kauf genommen werden, was jedoch zu langen Peilzeiten führt.

Es ist Aufgabe der Erfindung, einen Hochfrequenzpeiler mit diskreter Abtastung der Einzelantennen zu schaffen, der trotz einfachen Aufbaus des Empfangskanals minimale Peilzeiten ermöglicht.

Diese Aufgabe wird ausgehend von einem Hochfrequenzpeiler laut Oberbegriff des Hauptanspruches durch dessen kennzeichnende Merkmale gelöst. Eine vorteilhafte Weiterbildung ergibt sich aus den Unteransprüchen.

Bei dem erfindungsgemäßen Hochfrequenzpeiler ist der Empfangskanal nicht mehr analog aufgebaut, sondern arbeitet digital, wobei durch die Synchronisation zwischen Antennenanschaltung und Abtastintervall des digitalen Filters der Zeitbedarf für die Antennenanschaltung minimal ist und trotzdem optimale Selektionseigenschaften des Empfangskanals erzielt werden. Die Synchronisation und Zeitgleichheit zwischen Antennenanschalt-Zeitintervall und Digitalfilter-Abtastintervall wird dadurch erreicht, daß die Zeit T, in welcher jeweils eine Einzelantenne des Peilers an den Empfangskanal zur Auswertung angeschaltet ist, mindestens so groß gewählt wird wie zur Erzeugung des Datenblocks von n-Abtastwerten des Analog/Digital-Wandlers benötig wird. Diese Zeit T hängt ihrerseits von der benötigten ZF-Bandbreite des Digitalfilters ab, sie wird im allgemeinen etwa zwei- bis dreimal so groß wie die gewünschte ZF-Bandbreite gewählt (abhängig von der Fensterfunktion).

Die Erfindung wird im folgenden anhand schematischer Zeichnungen an zwei Ausführungsbeispielen näher erläutert.

Fig. 1 zeigt das Prinzipschaltbild eines Einkanalpeilers mit diskreter Antennenabtastung.

Fig. 2 zeigt einen Einkanalpeiler mit getrenntem Referenzkanal.

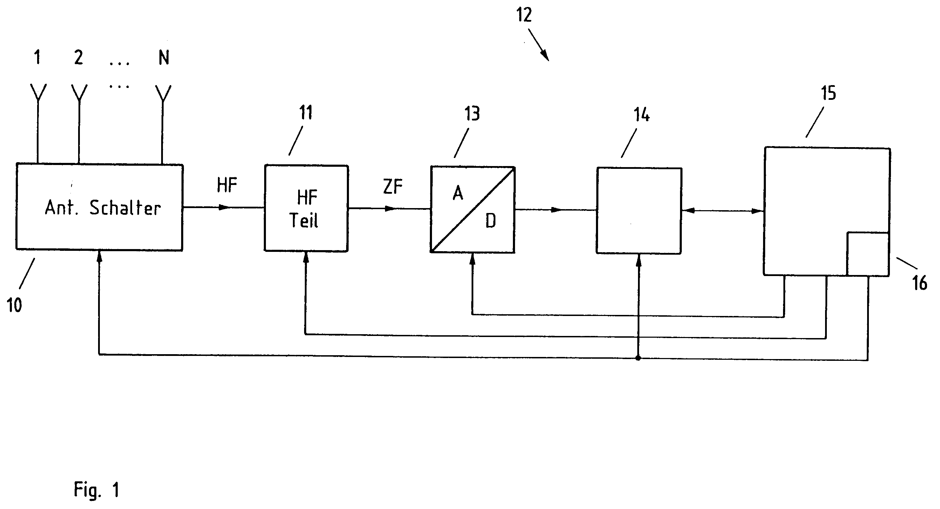

Bei dem Einkanalpeiler nach Fig. 1 werden die einzelnen Empfangsantennen 1, 2 ... N mittels einer Antennenanschalteinrichtung 10 nacheinander an ein analoges Hochfrequenzteil 11 eines Empfangskanales 12 angeschaltet. Je nach Art des verwendeten Peilsystems können auf diese Weise eine, zwei oder mehrere der vorhandenen Einzelantennen 1 bis N zur Auswertung an einen oder mehrere Empfangskanäle angeschaltet werden, in dem gezeigten Ausführungsbeispiel nach Fig. 1 ist der Einfachheit halber nur ein einziger Empfangskanal dargestellt, an den während einer Zeit T jeweils nur eine einzige Antenne über die Schalteinrichtung 10 angeschaltet ist. Im analogen Hochfrequenzteil wird das Hochfrequenzsignal der gerade angeschalteten Antenne in eine Zwischenfrequenz umgesetzt und einem Analog/Digital-Wandler 13 zugeführt, das digitale Ausgangssignal wird einem digitalen Filter 14 zugeführt, das mit einer vorbestimmten Fensterfunktion arbeitet. Das Ausgangssignal des Filters 14 wird dann in einer Auswerteinrichtung 15 nach einem bekannten Peilverfahren ausgewertet.

Die Auswertung des Antennensignals erfolgt im einfachsten Fall über ein Zeitintervall von n-Abtastwerten des A/D-Wandlers 13 mit einer Abtastfrequenz $f_a$. Das Abtastintervall bzw. Abtastfenster des digitalen Filters 14 ist im einfachsten Fall ein Rechteckfenster, das jedoch entsprechend schlechte Selektionseigenschaften besitzt. Zur Verbesserung der Selektion wird eine spezielle Fensterfunktion verwendet, d.h. die Abtastwerte des A/D-Wandlers werden innerhalb des Abtastintervalles des digitalen Filters mit einer vorgegebenen Fensterfunktion multipliziert und diese so bewerteten Abtastwerte werden dann dem eigentlichen Filterprozeß, beispielsweise einer diskreten Fouriertransformation unterworfen oder sie werden in einem nicht rekursiven Filter ausgewertet.

Das digitale Filter 14 und die Antennen-Schalteinrichtung 10 werden über eine zentrale Steuereinrichtung 16 so gesteuert, daß das Zeitintervall der Antennenanschaltung jeweils mit dem Abtastintervall (Abtastfenster) des Digitalfilters zeitgleich ist, die gewählte Fensterfunktion des Digitalfilters wirkt damit auf die beiden Abtastvorgänge in der Antennenschalteinrichtung 10 und dem Digitalfilter 14 und es ist daher auch das Selektionsproblem für die Antennenabtastung mit gelöst.

Das digitale Filter 14 kann entweder als Einkanalfilter oder aber auch als Vielkanalfilter ausgebildet sein, im letzteren Falle kann ein breites Frequenzspektrum gleichzeitig ausgewertet werden. Für ein Einkanalfilter wird vorzugsweise ein sogenanntes Transversalfilter benutzt, das einen Datenblock der Länge n verarbeitet, die Filterkoeffizienten dieses Transversalfilters sind entsprechend der gewünschten Fensterfunktion gewählt. Ein Vielkanalfilter wird im einfachsten Falle durch mehrere entsprechend frequenzversetzte Einkanalfilter, vorzugsweise wiederum Transversalfilter, gebildet. Eine besonders einfache Ausführung für ein Vielkanalfilter ergibt sich bei Anwendung der sogenannten FFT-Auswertung (Fast Fourier Transformation). In diesem Fall entspricht die zeitliche Länge des auszuwertenden Datenblockes dem Abtastintervall des Einkanalfilters, die zeitliche Länge dieses Datenblockes ist also bei der FFT-Auswertung gleich dem Zeitintervall T der Antennenanschaltung oder steht mit diesem in einem ganzzahligen Verhältnis. Die zeitliche Länge des Datenblockes und die Fensterfunktion bestimmen auch in diesem Fall die Auflösung und die Selektionseigenschaften.

Jede Einzelantenne 1 bis N muß mindestens für die Zeit T angeschaltet werden, die zur Erzeugung von n-Abtastwerten des A/D-Wandlers 13 benötigt wird, es gilt also $T \geqq n/f_a$. Diese Zeit T hängt außerdem noch, wie bereits erwähnt, von der benötigten ZF-Bandbreite B und der Fensterfunktion des Digitalfilters 14 ab, T wird etwa 2/B bis 3/B gewählt, für eine Bandbreite von beispielsweise 100 Hz wird T also etwa 20 bis 30 ms gewählt. Der sich daraus ergebende Zeitbedarf für die Antennenanschaltung ist also minimal.

Im praktischen Betrieb sollen im Peilgerät mehrere Bandbreiten wählbar sein. Die zugehörige Antennenanschaltzeit läßt sich automatisch mit umschalten. In bestimmten Betriebsfällen, z.B. wenn mehrere Peilgeräte an die gleiche Peilantenne angeschlossen sind, sollen die Antennenanschaltzeiten jedoch konstant bleiben. In diesem Fall kann die Länge des Datenblocks bezogen auf die Antennenanschaltzeit um ein ganzzahliges Vielfaches k verlängert oder um 1/k verkürzt werden. Die wählbaren Bandbreiten stehen dann ebenfalls in diesem Verhältnis k zueinander.

Im ersten Fall benötigt man k Abtastzyklen für eine Peilung. Im zweiten Fall wird die Antennenanschaltzeit in k Abschnitte unterteilt. Die Peilzeit ist dann länger, als von der Bandbreite her erforderlich.

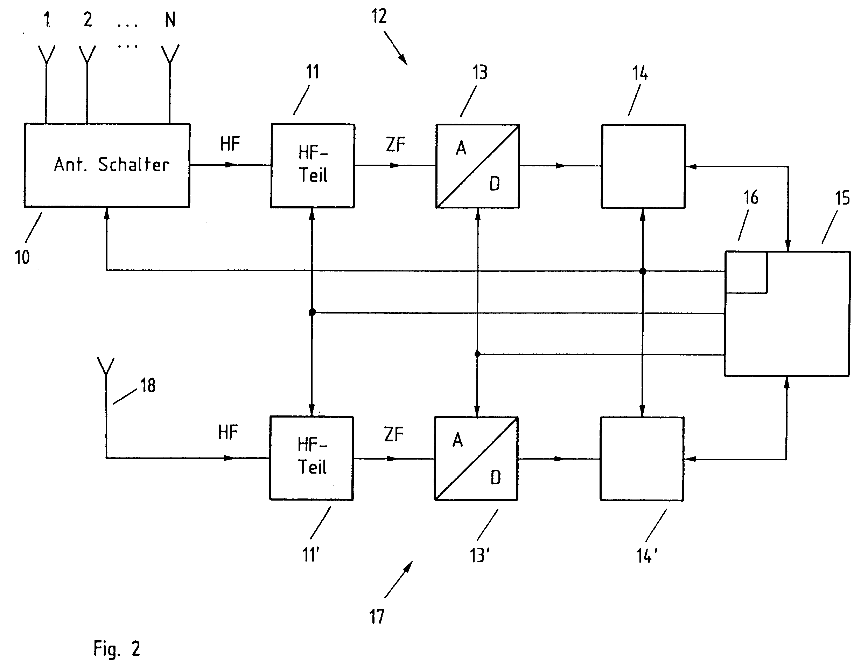

Im Ausführungsbeispiel nach Fig. 1 mit einem einzigen Empfangskanal wird beispielsweise im Auswertteil 15 die Amplitude des Empfangssignals der angeschalteten Einzelantenne ausgewertet. Soll auch die Phase ausgewertet werden, müssen die komplexen Spannungen der Einzelantennen bezogen auf eine Referenzantenne gemessen werden. Dies kann in einem Einkanalempfänger durch entsprechende Ausgestaltung des analogen HF-Teiles 10, 11 nach dem Deutschen Patent 36 36 630 erfolgen oder gemäß Fig. 2 mit einem zusätzlichen Referenzsignal-Empfangskanal 17, der mit einer Referenzantenne 18 verbunden ist und wiederum aus einem analogen Hochfrequenzempfangsteil 11′ einem A/D-Wandler 13′ und einem digitalen Filter 14′ besteht. Beide Kanäle 12 und 17 müssen zeitsynchron und frequenzsynchron arbeiten. Wenn die Zeit für die Antennenabtastung beispielsweise bei einem schnellen Suchpeiler durch weitere parallel arbeitende Peilkanäle 12 verkürzt werden soll, müssen alle Empfangskanäle amplituden- und phasentreu sein.

## Patentansprüche

1. Hochfrequenzpeiler, bei dem über eine Schalteinrichtung (10) nacheinander jeweils mindestens eine von mehreren Empfangsantennen (1 bis N) an mindestens einen Empfangskanal (12) mit ZF-Umsetzung angeschaltet wird, dadurch **gekennzeichnet**, daß der Empfangskanal (12) einen A/D-Wandler (13) mit nachgeschaltetem digitalen Filter (14) aufweist und das digitale Filter (14) und die Antennen-Schalteinrichtung (10) so gesteuert sind (Steuerschaltung 16), daß das Zeitintervall (T) der Antennenanschaltung mit dem Abtastintervall des digitalen Filters (14) zeitgleich ist oder mit diesem in einem ganzzahligen Verhältnis (K oder 1/K) steht.

2. Hochfrequenzpeiler nach Anspruch 1, dadurch **gekennzeichnet**, daß das Zeitintervall (T) der Antennenanschaltung mindestens so groß wie die zur Erzeugung von n-Abtastwerten des A/D-Wandlers (13) benötigte Zeit gewählt ist ($T \geqq n/f_a$).

3. Hochfrequenzpeiler nach Anspruch 1 oder 2, dadurch **gekennzeichnet**, daß das digitale Filter ein nicht rekursives Filter, insbesondere ein Transversalfilter, ist.

4. Hochfrequenzpeiler nach Anspruch 1 oder 2, dadurch **gekennzeichnet**, daß das digitale Filter ein Vielkanalfilter mit FFT-Auswertung ist.

## Claims

1. Radio-frequency direction finder, in which at least a respective one of a plurality of receiving aerials (1 to N) is successively connected via a switching device (10) to at least one receive channel (12) with IF conversion, characterised in that the receive channel (12) has an analogue-to-digital converter (13) with a downstream digital filter (14), and the digital filter (14) and the aerial switching device (10) are so controlled (control circuit 16) that the aerial-activation time-interval (T) is chronologically identical with the scanning interval of the digital filter (14) or is in a whole-number ratio (K or 1/K) thereto.

2. Radio-frequency direction finder according to claim 1, characterised in that the aerial-activation time-interval (T) is at least as long as the time required to generate n scanning values of the analogue-to-digital converter (13) ($T \geqq n/f_a$).

3. Radio-frequency direction finder according to claim 1 or 2, characterised in that the digital filter is a non-recursive filter, more particularly a transversal filter.

4. Radio-frequency direction finder according to claim 1 or 2, characterised in that the digital filter is a multi-channel filter with FFT-type evaluation.

## Revendications

1. Goniomètre à haute fréquence qui attaque par l'intermédiaire d'une installation de commutation (10), successivement au moins l'une de plusieurs antennes de réception (1...N) sur au moins un canal de réception (12) avec conversion FI, caractérisé en ce que le canal de réception (12) comprend un convertisseur analogique/numérique (A/D) (13), suivi d'un filtre numérique (14) et le filtre numérique (14) et l'installation de commutation d'antenne (10) sont commandés (circuit de commande 16) pour que l'intervalle de temps (T) du circuit d'attaque d'antenne soit égal, en temps, à l'intervalle de détection du filtre numérique (14) ou soit dans un certain rapport (K ou 1/K) avec celui-ci.

2. Goniomètre haute fréquence selon la revendication 1, caractérisé en ce que l'intervalle de temps (T) de l'attaque d'antenne est au moins égal à celui du temps nécessaire pour créer n valeurs de balayage du convertisseur analogique/numérique (13) ($T \cong n/f_a$).

3. Goniomètre haute fréquence selon la revendication 1 ou 2, caractérisé en ce que le filtre numérique est un filtre non récurrent, notamment un filtre transversal.

4. Goniomètre haute fréquence selon la revendication 1 ou 2, caractérisé en ce que le filtre numérique est un filtre à canal multiple à exploitation avec transformation de Fourier rapide (FFT).

Fig. 1

EP 0 455 102 B1

1  2  ...  N

Ant. Schalter

HF

HF-Teil

ZF

A / D

HF

HF-Teil

ZF

A / D

10  11  12  13  14  16  15  18  11'  13'  14'  17

Fig. 2